Europäisches Patentamt

European Patent Office

Office européen des brevets

(11) Veröffentlichungsnummer: **0 485 750 A1**

# EUROPÄISCHE PATENTANMELDUNG

(21) Anmeldenummer: **91117536.2**

(22) Anmeldetag: **15.10.91**

(51) Int. Cl.⁵: **B29C 65/20**, B29C 65/50

(30) Priorität: **14.11.90 DE 4036245**

(43) Veröffentlichungstag der Anmeldung:
**20.05.92 Patentblatt 92/21**

(84) Benannte Vertragsstaaten:
**AT BE CH DE DK ES FR GB GR IT LI LU NL SE**

(71) Anmelder: **Dommer, Armin**
**Eichweg 13**
**W-7257 Ditzingen 1(DE)**
Anmelder: **Dommer, Dieter**
**Bahnhofstrasse 5**
**W-7257 Ditzingen 1(DE)**

(72) Erfinder: **Dommer, Armin**
**Eichweg 13**
**W-7257 Ditzingen 1(DE)**
Erfinder: **Dommer, Dieter**
**Bahnhofstrasse 5**
**W-7257 Ditzingen 1(DE)**

(74) Vertreter: **Vogel, Georg**
**Pat.-Ing. Georg Vogel**
**Hermann-Essig-Strasse 35**
**W-7141 Schwieberdingen(DE)**

(54) **Vorrichtung zum Ziehkeilschweissen von Trennfugen.**

(57) Die Erfindung betrifft eine Vorrichtung zum Ziehkeilschweißen von Trennfugen (12,13) eines aus Profilabschnitten (10.1,10.2) zusammengesetzten Kunststoff-Hohlprofilabschnittes (10). Die Vorrichtung wird durch den Hohlraum (11) des Kunststoff-Hohlprofilabschnittes gezogen, wobei Heizleisten (24.1,24.2) die Fugenwände (14-17) der Trennfugen und die zum Verschweißen benötigten Kunststoff-Schweißdrähte (20.1,20.2) plastifizieren. Die plastifizierten Kunststoff-Schweißnähte werden mittels Andrückteilen (25.1,25.2) in die plastifizierten Trennfugen eingedrückt, wenn mittels eines Zugmittels (29) und eines geschwindigkeitsregelbaren Getriebemotors die Vorrichtung kontinuierlich durch den Kunststoff-Hohlprofilabschnitt gezogen wird.

EP 0 485 750 A1

Die Erfindung betrifft eine Vorrichtung zum Ziehkeilschweißen nach dem Oberbegriff des Patentanspruches 1.

Beim Abdichten von Deponien werden sogenannte Drainwände aus Folienabschnitten zusammengesetzt, die an ihren vertikalen Kanten mit Profilabschnitten abgeschlossen sind. Diese Profilabschnitte benachbarter Folienabschnitte sind ineinanderschiebbar, so daß sie einen Kunststoff-Hohlprofilabschnitt bilden. Dieser zusammengesetzte Kunststoff-Hohlprofilabschnitt ist die Schwachstelle der gebildeten Drainwand, da die Trennfugen zwischen den Profilabschnitten des zusammengesetzten Kunststoff-Hohlprofilabschnitts die Drainwand an dieser Stelle durchlässig machen. Es wurden bereits Vorrichtungen vorgeschlagen, durch die Trennfugen zwischen zwei Kunststoff-Hohlprofilabschnitten zusammenschweißbar sind. So ist z.B. in der DE 38 14 329 A1 eine Schweißpatrone für die Verschweißung von Kunststoff-Abdichtungsbahnen in Heizschlitzen beschrieben, wobei die Abdichtungsbahnen mit angeschweißten und angeformten Randprofilen ineinandergreifen und die Schweißpatrone eine angeformte, montierte Verdickung aufweist, mit der sie durch die Randprofile hindurchgezogen oder hindurchgeschoben wird und dabei Material der Randprofile plastifiziert und die Dichtfugen der Randprofile drückt. In Bewegungsrichtung vor der Verdickung sind Flügel an der Patrone vorgesehen, die zumindest teilweise in die Dichtfuge ragen. Beim Durchziehen der Schweißpatrone durch die Randprofile räumen die Flügel zunächst die Dichtfugen sauber. Dabei verbleiben erwärmte Dichtflächen. Die nachlaufende Verdickung bewirkt infolge ihrer Temperatur und Abmessungen eine Aufschmelzung des die Öffnung umgebenden Materialbereichs. Zugleich wird das aufgeschmolzene Material wie ein Pfropfen vorgeschoben und in die Dichtungen gedrückt. Dabei entsteht eine Verschweißung weil die Schweißflächen erwärmt und das auftretende geschmolzene Material einen Druck entfaltet. Als Nachteil dieser bekannten Schweißpatrone ist die Tatsache anzusehen, daß sie zum einen auf die Innenmaße und zum anderen auf die Form der Trennfugen abgestimmt sein muß, so daß für unterschiedliche Trennfugen unterschiedliche Schweißpatronen erforderlich sind. Ferner ist in der DE 35 20 682 A1 ein Schweißgerät zum Verschweißen von Folien im Außenbereich beschrieben, bei dem an einem L-förmigen Schweißschuh eine Reinigungs- und/oder Aufrauheinrichtung in Form eines Kettengliedes angeordnet ist. Diese Schweißkette ist zum Schweißen von Trennfugen eines aus Profilabschnitten zusammengesetzten Kunststoff-Hohlprofilabschnittes schon aus räumlichen Gründen nicht ohne weiteres verwendbar. Die Beheizung erfolgt mittels Heizluft, die zur Verformung des Kunststoff-Hohlprofilabschnittes führen kann. Schließlich ist in der DE 30 18 379 C1 eine Vorrichtung zum Verschweißen eines Überlappstoßes oder Fugenbandstoßes mit oder ohne Schweißbänder von stirnseitig aufeinanderstoßenden Rohren, insbesondere Betonrohren mit Kunststoffauskleidung beschrieben. Diese Vorrichtung besitzt einen in den Rohren verfahrbaren und feststellbaren Zentrierwagen mit zumindest einem um eine in der Rohrachse liegenden Drehachse umlaufenden Tragarm mit zumindest einem an einem Tragarmende um eine rohraxiale Schwenkachse schwenkbar gelagerten Kipphebel. Der Kipphebel besitzt an dem einen Hebelende eine angreifende Spannvorrichtung und an dem anderen Hebelende ein befestigtes Schweißgerät mit einem Antrieb für zumindest ein an der Rohrinnenwand ablaufendes Antriebsrad. Ferner sind dem Schweißgerät nachlaufende Andrückrollen für den geschweißten Stoß und Führungsrollen für das Schweißgerät vorgesehen. Der Kipphebel ist hierbei um eine rohrradiale Drehachse drehbar gelagert. Neben dem Schweißgerät ist ein Führungswagen mit den Führungsrollen vorgesehen, wobei das Schweißgerät und der Führungswagen am selben Kipphebel angelenkt sind. Schließlich ist vorgesehen, daß der Führungswagen auf einem neben dem zu schweißenden Stoß parallel ausgerichteten Führungsring verfahrbar ist und der Führungsring in eins der jeweils benachbarten Rohre einspannbar ist. Diese Vorrichtung kann zwar dann eingesetzt werden, wenn die Trennfugen radialseitig ausgebildet sind. Erstrecken sich die Trennfugen in axialer Richtung der Rohre, dann ist ein kontinuierliches Verschweißen der Trennfugen nicht ohne weiteres möglich.

Ausgehend von dem obigen Stand der Technik liegt der Erfindung die Aufgabe zugrunde, die gattungsgemäße Vorrichtung so weiterzubilden, daß ein Verschweißen von Trennfugen einfach und problemlos in zusammengesetzten Kunststoff-Hohlprofilabschnitten mit unterschiedlichen Größen erfolgen kann.

Die gestellte Aufgabe wird erfindungsgemäß durch die kennzeichnenden Merkmale des Patentanspruches 1 gelöst.

Die Vorrichtung ist in den Hohlraum des zusammengesetzten Kunststoff-Hohlprofilabschnittes einführbar, auch wenn dieser nur von einer Stirnseite aus zugänglich ist, was beim Verlegen von Drainagen in einem schmalen Graben durchaus vorkommt. Das Tragteil weist die Elemente auf, um die Fugenwände der Trennfugen und die Kunststoff-Schweißdrähte zu plastifizieren, sowie die Andrückteile, die beim Herausziehen der Vorrichtung die plastifizierten Kunststoff-Schweißdrähte in die Trennfugen eindrücken, die ja ebenfalls plastifiziert sind. Dabei ist wichtig, daß die Enden der Kunststoff-Schweißdrähte an einem Ende des Kunststoff-Hohlprofilabschnittes festlegbar sind und daß die plastifizierten Kunststoff-Schweißdrähte nicht reißen. Deshalb sind sie mit einer reißfesten Einlage versehen. Das Zugmittel ist wie die Kunststoff-Schweißdrähte aus dem Kunststoff-Hohlprofilabschnitt herausgeführt. Das Tragteil mit den Heizleisten und den Andrückteilen wird über das von einem geschwindigkeitsregelbaren Getriebemotor gezogenen Zugmittel so bewegt, daß der Plastifiziervorgang und der Andrückvorgang in der richtigen Zeit über die Länge der Trennfugen abläuft. Die Temperaturmessung im Bereich der Heizleisten gibt dazu den Startbefehl.

Weitere zweckmäßige Ausgestaltungen der Erfindung gehen aus den Unteransprüchen hervor.

Das Einführen des Tragteils in den Hohlraum des Kunststoff-Hohlprofilabschnittes wird dadurch erleichtert, daß das Tragteil zwei drehbar miteinander verbundene Hebel aufweist, die mittels eines pneumatisch oder hydraulisch steuerbaren Zylinders gegeneinander und in Richtung der Trennfugen verschwenkbar sind, und daß der Zylinder über eine Steuerleitung mit Steuermittel beaufschlagbar ist. Beim Einführen nehmen die Hebel eine Stellung ein, die den Querschnitt der Vorrichtung verringert, während sie durch den Zylinder so verstellt werden, daß die Vorrichtung die Arbeitsstellung einnimmt. Dabei ist die Ausgestaltung der Vorrichtung vorzugsweise so, daß die Hebel zweiarmig ausgebildet sind, wobei die dem Zugmittel zugekehrten Hebelarme mittels des Zylinders verschwenkbar sind, während die dem Zugmittel abgekehrten Hebelarme die Heizleisten und die Andrückmittel tragen. Das Zugmittel ist dabei an dem Hebelarm des einen Hebels angebracht, während am Hebelarm des anderen Hebels der Zylinder befestigt ist.

Damit die Heizleisten ihre Funktion sicher ausführen können, ist nach einer Ausgestaltung vorgesehen, daß die Heizleisten eine Außenkontur aufweisen, die an die Form der Trennfugen angepaßt ist, und daß die Heizleisten einen Durchgangskanal aufweisen, dessen Querschnitt an den Querschnitt der Kunststoff-Schweißdrähte angepaßt ist.

Bei dieser Auslegung plastifiziert die Außenkontur der Heizleiste die Fugenwände der zugeordneten Trennfuge und im Durchgangskanal wird der Kunststoff-Schweißdraht plastifiziert, wenn das Tragteil in richtiger Geschwindigkeit durch den Kunststoff-Hohlprofilabschnitt gezogen wird.

Der plastifizierte Kunststoff-Schweißdraht verläßt den Durchgangskanal der Heizleiste und wird von dem zugeordneten Andrückteil in die zugeordnete Trennfuge eingedrückt, wo er sich mit den plastifizierten Fugenwänden verbindet. Damit dies sicher geschieht, sieht eine weitere Ausgestaltung vor, daß die Andrückteile aus Teflon bestehen und auf der der Trennfuge abgekehrten Seite den Durchgangskanal der Heizleisten teilweise abdecken.

Ist vorgesehen, daß die Heizpatronen und Thermofühler der Heizleisten über Anschlußkabel aus dem Kunststoff-Hohlprofilabschnitt herausgeführt sind, dann können die Heizleisten außerhalb des Kunststoff-Hohlprofilabschnittes mit einer Stromquelle verbunden werden und es läßt sich auch außerhalb des Kunststoff-Hohlprofilabschnittes die Temperatur der Heizleisten und damit der Plastifiziervorgang überwachen.

Damit die Heizleisten und Andrückteile beim Ziehen durch den Kunststoff-Hohlprofilabschnitt ihre definierte Arbeitsstellung einhalten, sieht eine weitere Ausgestaltung vor, daß die Vorrichtung durch die Heizleisten und die Andrückteile in der Arbeitsstellung der Hebel unverdrehbar im Hohlraum des Kunststoff-Hohlprofilabschnittes geführt ist.

Die Festlegung der Enden der Kunststoff-Schweißdrähte im Kunststoff-Hohlprofilabschnitt wird nach einer Ausgestaltung dadurch erreicht, daß die Enden der aus den Heizleisten ragenden Kunststoff-Schweißdrähte mittels einer Spannklammer miteinander verbunden sind und daß die Spannklammer mittels einer aus dem Kunststoff-Hohlprofilabschnitt herausgeführten Stelleinrichtung gegen die Innenwandungen, insbesondere die Trennfugen, verspannbar ist.

Als reißfeste Einlage der Kunststoff-Schweißdrähte wird ein Stahldraht oder dgl. gewählt, der vorzugsweise eingebettet ist. Die Reißfestigkeit kann jedoch auch durch andere Mittel erreicht werden, die auch auf andere Art mit dem Kunststoff-Schweißdraht verbunden sein können.

Die Erfindung wird anhand eines in den Zeichnungen dargestellten Ausführungsbeispiels näher erläutert. Es zeigt:

Fig. 1     im Querschnitt einen aus zwei identischen Profilabschnitten zusammengesetzten Kunststoff-Hohlprofilabschnitt,

Fig. 2     in Seitenansicht die Vorrichtung zum Ziehkeilschweißen der Trennfugen im Kunststoff-Hohlprofilabschnitt nach Fig. 1,

Fig. 3     einen Querschnitt, der die Vorrichtung nach Fig. 2 in Arbeitsstellung im Kunststoff-Hohlprofilabschnitt nach Fig. 1 wiedergibt,

Fig. 4     in Seitenansicht eine weitere Ausführungsform der Vorrichtung zum Ziehschweißen der Trennfugen und

Fig. 5     einen Querschnitt, der die Vorrichtung nach Fig. 4 in Arbeitsstellung im Kunststoffhohlprofil nach Fig. 1 zeigt.

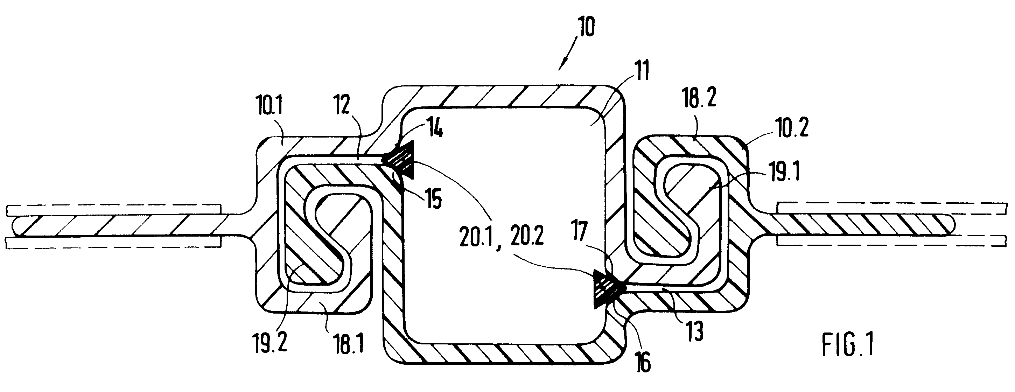

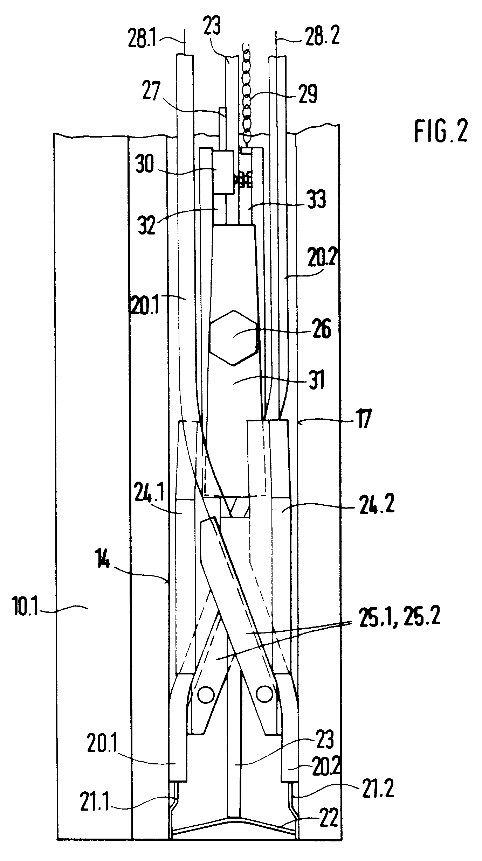

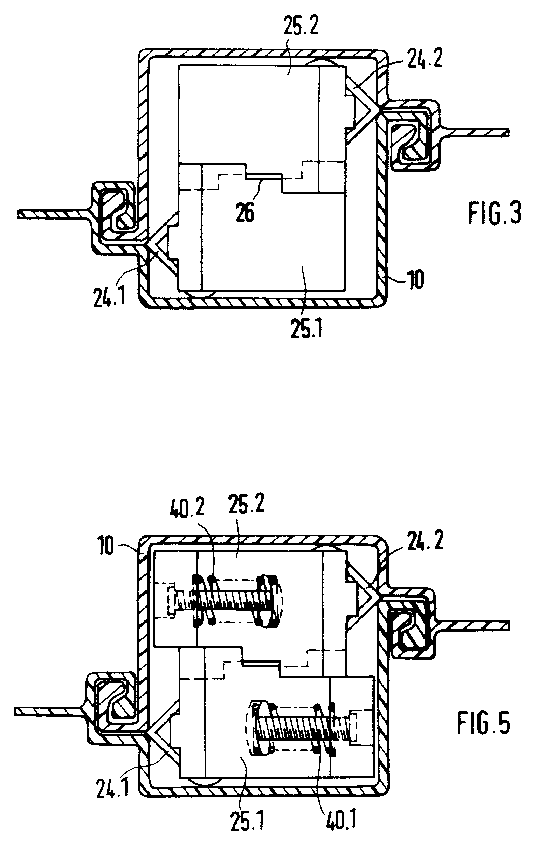

Der Kunststoff-Hohlprofilabschnitt 10 nach Fig. 1 ist aus zwei identischen Profilabschnitten 10.1 und 10.2 zusammengesetzt, der dann einen im Querschnitt etwa quadratischen oder rechteckigen Hohlraum 11 umschließt. Im Prinzip bilden die Profilabschnitte 10.1 und 10.2 jeweils zwei Seitenwände des Kunststoff-Hohlprofilabschnittes 10, die an einer Seitenkante in eine Verbindungsnut 18.1 bzw. 18.2 und an der anderen Seitenkante einen entsprechenden Verbindungssteg 19.1 bzw. 19.2 aufweisen und um 180° gegeneinander verdreht ineinander geschoben sind. An den Verbindungsnuten 18.1 bzw. 18.2 sind abstehende Befestigungsflansche angeformt, an denen die Folien der Drainwand-Abschnitte angeschweißt werden. Dabei kann die Wand durchaus auch doppellagig ausgebildet sein. Die beiden Profilabschnitte 10.1 und 10.2 bilden an ihren Anlagestellen einen Spalt, der von der einen Seite der Drainwand zur anderen Seite der Drainwand durchgeht. Um diesen Spalt zu verschließen, werden die zum Hohlraum 11 hin zwischen den Wandungen der Profilabschnitte 10.1 und 10.2 gebildeten Trennfugen 12 und 13 verschweißt, wie die vom Hohlraum 11 aus angeschweißten Kunststoff-Schweißdrähte 20.1 und 20.2 andeuten, die mit den Fugenwänden 14 und 15 bzw. 16 und 17 verschweißt werden und zwar mit einer Vorrichtung nach Fig. 2 und 3.

Beim Ziehkeilschweißen steht der zusammengesetzte Kunststoff-Hohlprofilabschnitt 10 mit den an den Profilabschnitten 10.1 und 10.2 angeschweißten Folien in einem schmalen Graben, so daß der Hohlraum 11 mit den Trennfugen 12 und 13 nur von der oberen Stirnseite aus zugänglich ist. Die Vorrichtung muß im Querschnitt so gebaut sein, daß sie leicht in den Hohlraum 11 eingeführt und darin bis zum unteren, nicht zugänglichen Ende des Hohlraumes 11 verschoben werden kann.

Die Vorrichtung weist das Tragteil 31 auf, an dem mit dem Drehlager 26 die beiden Hebel 32 und 33 schwenkbar gelagert sind. Dem unteren Ende des Hohlraumes 11 zugekehrt tragen die Hebel 32 und 33 die Heizleisten 24.1 und 24.2. Die Heizleisten 24.1 und 24.2 haben eine Außenkontur, die an die Trennfugen 12 und 13 angepaßt sind. Die Hebel 32 und 33 sind dem oberen Ende zugekehrt mittels eines pneumatisch oder hydraulisch steuerbaren Zylinders 30 auslenkbar. Die zum unteren Ende des Hohlraumes 11 zugekehrten Hebelenden sind verschränkt, so daß sie sich ebenfalls auslenken und gegen die Trennfugen 12 und 13 gedrückt werden. Diese Einstellung der Heizleisten 24.1 und 24.2 in die Arbeitsstellung erfolgt erst nach dem Einführen der Vorrichtung bis zum unteren Ende des Hohlraumes 11. Die Heizleisten 24.1 und 24.2 weisen einen Durchgangskanal auf, der einen an den Querschnitt der Kunststoff-Schweißdrähte 20.1 und 20.2 angepaßten Querschnitt aufweisen. Die Kunststoff-Schweißdrähte 20.1 und 20.2 sind mit einer reißfesten Einlage, z.B. einem eingebetteten Stahldraht, versehen, so daß sie auch im plastifizierten Zustand nicht abreißen, wenn die Vorrichtung an ihnen hochgeführt wird. Die Heizleisten 24.1 und 24.2 werden durch Heizpatronen geheizt und von Thermofühlern in der Temperatur überwacht. Die Anschlußkabel 28.1 und 28.2 führen die Heizpatronen und die Thermofühler aus dem Kunststoff-Hohlprofilabschnitt 10 heraus und können mit der Stromquelle bzw. dem Steuergerät verbunden werden. Im Einführungszustand ragen die Kunststoff-Schweißdrähte 20.1 und 20.2 an den unteren Enden der Durchgangskanäle aus den Heizleisten 24.1 und 24.2 heraus und sind mittels der Spannklammer 22 miteinander verbunden. Betätigt wird die Spannklammer 22 mittels einer Stelleinrichtung, z.B. der Stellstange 23, so daß zu Beginn des Schweißvorganges die unteren Enden der Kunststoff-Schweißdrähte 20.1 und 20.2 in den Trennfugen 12 und 13 verspannt und damit unverstellbar festgehalten sind. An den unteren Enden der Heizleisten 24.1 und 24.2 ragen die Andrückteile 25.1 und 25.2 vor, die ebenfalls an den Hebeln 32 und 33 befestigt sind. Diese Andrückteile 25.1 und 25.2 überdecken die Ausgänge der Durchgangskanäle der Heizleisten 24.1 und 24.2 auf den den Trennfugen 12 und 13 abgekehrten Seiten teilweise, so daß die aus den Heizleisten 24.1 und 24.2 austretenden, plastifizierten Kunststoff-Schweißdrähte 20.1 und 20.2 in die Trennfugen 12 und 13 eingedrückt werden. Da die Fugenwände 14 und 15 bzw. 16 und 17 der Trennfugen 12 und 13 durch die anliegenden Außenkonturen der Heizleisten 24.1 und 24.2 ebenfalls plastifiziert wurden, ergeben sich gute Schweißverbindungen, die die Trennfugen 12 und 13 fest verschließen.

Um die Verschweißung über die gesamte Länge der Trennfugen 12 und 13 ausführen zu können, ist das Zugmittel 29 an dem Hebel 33 angebracht, das ebenfalls aus dem Kunststoff-Hohlprofilabschnitt 10 oben herausgeführt und mit einem geschwindigkeitsregelbaren Getriebemotor verbunden ist. Damit kann die Vorrichtung in der auf die Schweißung abgestimmten Zeit durch den gesamten Kunststoff-Hohlprofilabschnitt 10 gezogen werden. Die Vorrichtung wird dabei an den in die Heizleisten 24.1 und 24.2 eingefädelten Kunststoff-Schweißdrähten 20.1 und 20.2 hochgezogen, wobei der Zylinder 30 betätigt bleibt und die Heizleisten 24.1 und 24.2 sowie die Andrückteile 25.1 und 25.2 in der Arbeitsstellung hält. Die beheizten Heizleisten 24.1 und 24.2 übernehmen die Plastifizierung der Kunststoff-Schweißdrähte 20.1 und 20.2 sowie der Fugenwände 14 und 15 bzw. 16 und 17 der Trennfugen 12 und 13.

Das Zugmittel 29 kann als Zugkette ausgebildet sein. Es ist auch eine sogenannte Energieführungskette denkbar, deren Kettenglieder einen Hohlraum umschließen, durch den die Anschlußkabel 28.1 und 28.2, die Stellstange 23 und die Kunststoff-Schweißdrähte 20.1 und 20.2 hochgeführt werden können. Eine derartige Energieführungskette hat den Vorteil, daß diese Elemente geschützt untergebracht sind und daß sie in der Strecklage eine ausreichend große Schubkraft auf die Vorrichtung mit dem Tragteil 31 übertragen kann.

Wie Fig. 3 zeigt, ist in der Arbeitsstellung die Vorrichtung durch die Hebel 32 und 33 mit den Andrückteilen 25.1 und 25.2 sowie den Heizleisten 24.1 und 24.2 unverdrehbar im Hohlraum 11 des zusammengesetzten Kunststoff-Hohlprofilabschnittes 10 geführt.

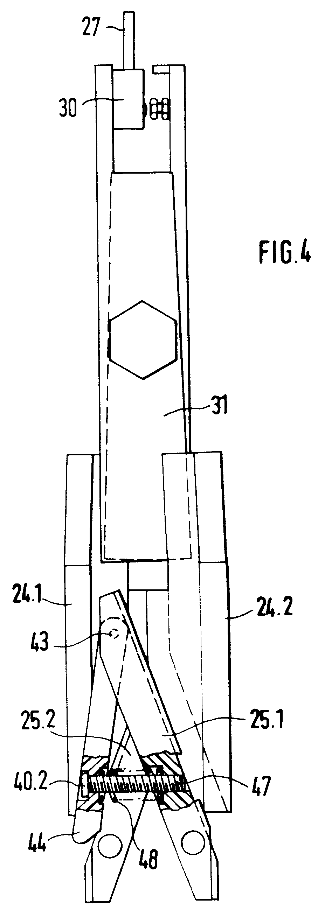

Die in den Fig. 4 und 5 dargestellte Vorrichtung unterscheidet sich von der Vorrichtung nach Fig. 2 im wesentlichen dadurch, daß der Dreh- und Schwenkpunkt 43 der Andrückteile 25.1 und 25.2 näher zu den freien Enden derselben angeordnet ist und daß diese Teile mit jeweils einer Druckeinrichtung 40.1 und 40.2 zusammenarbeiten. Bei den Druckeinrichtungen 40.1 und 40.2 handelt es sich um jeweils einen Schenkel 44, der im Drehpunkt 43 angelenkt und mit dem zugeordneten Andrückteil 25.1 mittels eines Bolzens 47 sowie einer Druckfeder 48 verbunden ist. Somit werden der Schenkel 44 und das zugeordnete Andrückteil gegen die Innenwand des Profilstückes gedrückt. Da die beiden Andrückteile 25.1 und 25.2 gegeneinander versetzt sind, sind auch die Schwenkel gegeneinander versetzt, und zwar mit der Folge, daß die Kräfteübertragung von der Vorrichtung auf das Profil besser erfolgen kann. Es kommt insbesondere zu keinem ungewollten Kippen der Vorrichtung innerhalb des Profils.

Im Rahmen dieses Grundgedankens bestehen viele Ausführungsmöglichkeiten. So könnte die Feder z.B. durch einen Pneumatikzylinder mit ersetzt werden. Ganz allgemein handelt es sich hier um eine Einrichtung, die bestrebt ist, die Andrückteile gegen die Innenwand des Profiles zu drücken, wobei eine gleichmäßige Kräfteverteilung vorhanden ist, so daß es zu keiner Drehbewegung der Vorrichtung kommen kann.

**Patentansprüche**

1. Vorrichtung zum Ziehkeilschweißen von Trennfugen eines aus Profilabschnitten zusammengesetzten Kunststoff-Hohlprofilabschnittes (10) mit einem in den Hohlraum (11) des Kunststoff-Hohlprofilabschnittes (10) einführbaren Tragteil (31), an dem ein von außen her betätigbares Zugmittel (29) angebracht ist und das pro Trennfuge (12, 13) jeweils eine Heizleiste (24.1, 24.2) mit Heizpatronen und Thermofühler aufweist, wobei die Heizleisten (24.1, 24.2) die Fugenwände (14, 15 bzw. 16, 17) der jeweils zugeordneten Trennfuge (12 bzw. 13) plastifizieren, dadurch gekennzeichnet,
daß die Heizleisten (24.1, 24.2) einen Kunststoff-Schweißdraht (20.1, 20.2) mit reißfester Einlage (21.1, 21.2) aufnehmen und plastifizieren, daß die aus den Heizleisten (24.1, 24.2) ragenden Enden der Kunststoff-Schweißdrähte (20.1, 20.2) nach dem Einführen in den Kunststoff-Hohlprofilabschnitt (10) an einem Ende des Hohlraums (11) festlegbar sind,
daß die plastifizierten, aus den Heizleisten (24.1, 24.2.) austretenden Kunststoff-Schweißdrähte (20.1, 20.2) jeweils mittels eines Andrückteils (25.1, 25.2.) in die zugeordneten Trennfugen (12, 13) einfügbar sind, wobei jedes Andrückteil (25.1, 25,2) mit jeweils einer Druckeinrichtung zusammenarbeitet, die sich einerseits am Druckteil (25.1, 25.2) und andererseits an der Innenwand des Kunststoff-Hohlprofilabschnittes (10) abstützt, und daß das Zugmittel (29) mit einem geschwindigkeitsregelbaren Getriebemotor verbunden ist, der über das Zugmittel (29) das Tragteil (39) mit den Heizleisten (24.1, 24.2) und den Andrückteilen (25.1, 25.2) an den Kunststoff-Schweißdrähten (20.1, 20.2) entlang durch den Kunststoff-Hohlprofilabschnitt (10) zieht.

2. Vorrichtung nach Anspruch 1,
dadurch gekennzeichnet,
daß das Tragteil (31) zwei drehbar miteinander verbundene Hebel (32, 33) aufweist, die mittels eines pneumatisch oder hydraulisch steuerbaren Zylinders (30) gegeneinander und in Richtung der Trennfugen (12, 13) verschwenkbar sind,
und
daß der Zylinder (30) über eine Steuerleistung (27) mit Steuermittel beaufschlagbar ist.

3. Vorrichtung nach Anspruch 1 oder 2,
dadurch gekennzeichnet,
daß die Hebel (32, 33) zweiarmig ausgebildet sind, wobei die dem Zugmittel (29) zugekehrten Hebelarme mittels des Zylinders (30) verschwenkbar sind, während die dem Zugmittel (29) abgekehrten Hebelarme die Heizleisten (24.1, 24.2) und die Andrückmittel (25.1, 25.2) tragen.

4. Vorrichtung nach Anspruch 3,
dadurch gekennzeichnet,
daß das Zugmittel (29) an dem Hebelarm des einen Hebels (33) angebracht ist, während am Hebelarm des anderen Hebels (32) der Zylinder (30) befestigt ist.

5. Vorrichtung nach einem der Ansprüche 1 bis 4,
dadurch gekennzeichnet,
daß die Holzleisten (24.1, 24.2) eine Außenkontur aufweisen, die an die Form der Trennfugen (12, 13) angepaßt ist, und
daß die Holzleisten (24.1, 24.2) einen Durchgangskanal aufweisen, dessen Querschnitt an den Querschnitt der Kunststoff-Schweißdrähte (20.1, 20.2) angepaßt ist.

6. Vorrichtung nach einem der Ansprüche 1 bis 5,
dadurch gekennzeichnet,
daß die Andrückteile (25.1, 25.2) aus Teflon bestehen und auf der der Trennfuge (12, 13) abgekehrten Seite den Durchgangskanal der Heizleisten (24.1, 24.2) teilweise abdecken.

7. Vorrichtung nach einem der Ansprüche 1 bis 6,
dadurch gekennzeichnet,
daß die Heizpatronen und Thermofühler der Heizleisten (24.1, 24.2) über Anschlußkabel (28.1, 28.2) aus dem Kunststoff-Hohlprofilabschnitt (10) herausgeführt sind.

8. Vorrichtung nach einem der Ansprüche 1 bis 7,
dadurch gekennzeichnet,
daß sie durch die Heizleisten (24.1, 24.2) und die Andrückteile (25.1, 25.2) in der Arbeitsstellung der Hebel (32, 33) unverdrehbar im Hohlraum (11) des Kunststoff-Hohlprofilabschnittes (10) geführt ist.

9. Vorrichtung nach einem der Ansprüche 1 bis 8,
dadurch gekennzeichnet,
daß die Enden der aus den Heizleisten (24.1, 24.2) ragenden Kunststoff-Schweißdrähte (20.1, 20.2) mittels einer Spannklammer (22) miteinander verbunden sind und
daß die Spannklammer (22) mittels einer aus dem Kunststoff-Hohlprofilabschnitt (10) herausgeführten Stelleinrichtung (z.B. Stellstange 23) gegen die Innenwandungen, insbesondere die Trennfugen (12, 13), verspannbar ist.

10. Vorrichtung nach einem der Ansprüche 1 bis 9,
dadurch gekennzeichnet,

daß in die Kunststoff-Schweißdrähte (20.1, 20.2) als reißfeste Einlage (21.1, 21.2) ein Stahldraht oder dgl. eingebettet ist.

11. Vorrichtung nach einem der Ansprüche 1 bis 10,
dadurch gekennzeichnet,
daß die Andrückteile (25.1, 25.2) mit mindestens einer Druckeinrichtung oder einem Druckkörper zusammenarbeiten, durch die bzw. den sie gegen die Innenwand des Kunststoff-Hohlprofilabschnittes (10.1, 10.2) preßbar sind.

12. Vorrichtung nach einem der Ansprüche 1 bis 11,
dadurch gekennzeichnet,
daß die Druckeinrichtung (40.1, 40.2) als Druckfeder oder Pneumatikzylinder mit einem Führungsabschnitt ausgebildet ist, der an der Innenwand des Kunststoff-Hohlprofilabschnittes führbar ist.

13. Vorrichtung nach einem der Ansprüche 1 bis 12,
dadurch gekennzeichnet,
daß der Führungsschnitt mit einer Rolle oder reibungsgeringem Werkstoff versehen ist.

FIG.1

EP 0 485 750 A1

FIG.2

FIG.3

FIG.5

FIG.4

Europäisches
Patentamt

**EUROPÄISCHER RECHERCHENBERICHT**

Nummer der Anmeldung

EP 91 11 7536

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | US-A-3 897 296 (J.E. WALDRUM)<br>* Spalte 12, Zeile 25 - Spalte 13, Zeile 35; Abbildungen 15-20 *<br>--- | 1-13 | B29C65/20<br>B29C65/50 |
| Y | EP-A-0 278 343 (F. JOACHIM)<br>* Spalte 5, Zeile 10 - Zeile 18; Abbildung *<br>--- | 1-13 | |
| D,A | EP-A-0 339 181 (NIEDERBERG-CHEMIE GMBH)<br>* das ganze Dokument *<br>--- | 1,7 | |
| A | DE-U-8 531 749 (WEGENER GMBH)<br>* Seite 12, Zeile 22 - Zeile 33; Abbildung 2 *<br>--- | 1,2,12 | |
| A | DE-A-2 412 101 (H. KRÜGER)<br>* Seite 4, Zeile 18 - Zeile 29; Abbildung *<br>--- | 1,10 | |
| A | EP-A-0 283 770 (NIEDERBERG-CHEMIE)<br>* Spalte 9, Zeile 51 - Zeile 53; Abbildungen 5,6 *<br><br>----- | 1,7,8 | RECHERCHIERTE SACHGEBIETE (Int. Cl.5 )<br><br>B29C<br>E02D |

Der vorliegende Recherchenbericht wurde für alle Patentansprüche erstellt

| Recherchenort | Abschlußdatum der Recherche | Prüfer |
|---|---|---|
| DEN HAAG | 18 FEBRUAR 1992 | TOPALIDIS A. |